(19) Europäisches Patentamt
European Patent Office
Office européen des brevets

(11) EP 3 979 193 A1

(12) EUROPEAN PATENT APPLICATION

(43) Date of publication:
06.04.2022 Bulletin 2022/14

(51) International Patent Classification (IPC):
G06T 7/00 (2017.01)      G06K 9/00 (2022.01)
G06T 7/90 (2017.01)

(21) Application number: 20199939.8

(22) Date of filing: 02.10.2020

(52) Cooperative Patent Classification (CPC):
G06T 7/0004; G06K 9/6271; G06T 7/90;
G06V 20/188; G06T 2207/10036;
G06T 2207/20084; G06T 2207/30128;
G06T 2207/30188; G06V 20/194

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Sensilize Ltd
4900100 Petah Tikva (IL)

(72) Inventors:
• Gilman, Pavel
6100000 Tel Aviv (IL)
• Pasha, Yurii
01001 Kyiv (UA)

(74) Representative: Bottino, Giovanni
ARBO Srl
Via Colombo, 11/29
16121 Genova (IT)

(54) SYSTEM FOR EVALUATING AND MONITORING PLANTS

(57) A system for evaluating and monitoring plants, comprising means for detecting spectral information of plants (10),
means (5) for detecting meteorology information,
means (4) for detecting soil information, the system further comprising a processing unit (21) communicating with said means and arranged for processing the detected information and the system comprising storing unit (22) arranged for storing the detected information.

Fig. 1

EP 3 979 193 A1

## Description

The present invention relates to a system for evaluating and monitoring plants, in the field of agriculture.

Climate change effects resulting in weather volatility together with misuse of chemicals and fertilizers are the major causes of pre-harvest loss.

Precision agriculture is the only alternative to increase yield in sustainable and financially feasible way offered to farmers nowadays by location specific variable dosage application of nutrients and plant protection products based on data from IoT, mobile labs as well as UAVs and satellites to detect, identify and mitigate crop nutrition deficiencies, diseases and pathogens.

However no solution integrating data from all device types and sources exists. Thus even with existing technologies farmers can not integrate data from all devices and equipment in one single system to get consolidated analysis and agronomical decisions on time.

Plant stress facilitates more crop damage when takes place during nutrition deficiencies and thereafter promotes pests spreading all over the field. Most efficient methods of harvest loss prevention are about precise nutrient application during specific growth stages of crop and enhancing biological content of soil.

No digital solution exists that is recommending variable application of biological pesticides, fungus, bacteria and organic nutrients based on plant physiology principles and human scientific expertise in specific area of crop sciences while costs of all biological alternatives is significantly higher than costs of chemical protection products. At the same time smaller farms are more price sensitive than large scale farming corporations due to economies of scale. With limited resources efficient prioritised decision making process can only be managed based on data analysis where variables such as soil content, temperature and moisture have to be considered together with spectral patterns identified.

Lack of experts at farms with knowledge in agronomy, chemistry, plant physiology and pathology is another barrier for increasing yields. Opportunity in modern farming to obtain professional advice from most relevant expert in a short time is missing while farmer has up to 3 days to react to sudden weather change after the latest information is available.

UAV made spectral imaging has proven to be useful in detection of some nutrient presence under specific crop stress, however commonly used indexes require specific spectral imagery processing and algorithms may have errors. Commonly used RGB cameras and multispectral devices use NDVI based maps while another 180 indexes have applicability with various crops under different conditions but are hardly ever used.

On RGB made images plant stress is not so visible as in spectral, but rather can be used for detection of some insects and weeds. Moreover collecting large data volumes requires scalable monitoring and scouting methods which are not affordable for most farmers.

Nevertheless most of precision agriculture device and software manufacturers lack integration in-between aiming to protect and grow their market share from strategic business development perspective with. Competing with each other in this way one common place which can accept any data to be analysed remotely from the field by computing power and by plan science experts.

The unsolved challenges include the requirement to record and interpret the complex and dynamic scenery of crops in field conditions, the need to comply with relatively low cost, as well as the need to keep the technology easy to use by farmers and well integrated to agriculture practices and machineries.

The invention solves the above mentioned drawbacks providing a system for evaluating and monitoring plants, which comprises:

> means for detecting spectral information of plants,
> means for detecting meteorology information,
> means for detecting soil information.

The system further comprises a processing unit arranged for processing the detected information and a storing unit arranged for storing the detected information.

As it will be disclosed, the system provides crop health management SaaS (software as service) system powered by Artificial Intelligence in phenotyping and crop stress detection supported by remote human expert advice. It provides decision-making support for crop growers before and throughout the whole season with instant call to action agronomy advice to optimising existing raw materials used by adding automated location-specific nutrition and biopesticide variable applications to increase yield and prevent harvest loss.

The system provides its unique spectral signature recognition technology which helps to detect and identify pests and lack of specific nutrients considering climate and soil conditions.

Each nutrition element and stress type of plants has unique "spectral reflectance signature ID" - pattern seen under specific spectral waveband length of light. Observing and measuring different nutrient concentrations or its absence under different plant stress conditions data was applied in neural networks for simulation of biological response scenarios.

Several stress types were identified and prevented as a result of actions based on analysis and recommendations. Search of those patterns was automated by algorithms based on these case studies but for reliability in different weather and soil conditions need further improvement and testing. Expansion of algorithms use other crop types and pests and now can be scaled of nutrient deficiency and crop stress identification.

The system collects optical spectral sensing data and variable multi-source data aggregated for optimization of fertilizers, chemical and biological raw material use.

This trend is fast growing as using data and artificial intelligence algorithms with remote sensing technologies in crop production can be the most important for efficiency increase and automation purposes. This data is found particularly useful when collected from multiple sources, analysed and applied using innovative technologies to collect and process data fast enough and to be able to prevent harvest loss by acting in advance. With conventional farming practices one cannot treat each separate plant individually and prepare for crop loss prevention strategy in advance.

The system sources data from multispectral imagery collected by UAV and satellite and consolidates with live weather forecasts, yield maps, in-field IoT devices, plant tissue and soil lab tests to provide farmers, their consultants and suppliers with cloud storage and analytics tools supported by core in-house science team of plant pathology, physiology and agronomy experts.

The system is aimed to give timely recommendations and navigated guidance through mobile applications and web access for field scouting, automated problematic field area detection, crop stress differentiation and suggested solutions considering existing in stock equipment and raw materials all the way through crop production from sowing to harvesting.

Furthermore every farm would require to have a constant presence of agronomist, pathologist and physiology of plants during the season.

Even when agronomists at farm collect data they often require a quick advice from pathology and physiology experts to correctly identify specific pathogen or disease and taking steps for protection strategy and nutrition improvements. In such instance segregation classification of data from various sources with the help of deep artificial intelligence can help to analyse, classify and prioritise field areas and crops that require attention at given specific time. Lack of human expertise can then be compensated by remote recommendations of risk assessment and actions to be taken for more efficient and sustainable crop production practices.

The system has the scope of utilising information technology for efficient production decision making purposes by collecting and processing data from various devices and systems such as GPS guidance, control systems, sensors, robotics, UAVs, autonomous vehicles, variable rate technology, location GPS-specific soil and leaf tissue sampling, automated hardware, telematics and software for. The concept based on observing, measuring and responding to detectable variability of soil and vegetation between and within the fields with location-specific crop loss preventing actions before and at all stages of crop season including: cultivation, seeding, protection, fertilization and harvesting . It allows farmers to optimize returns by mitigating crop stress on investment while preserving resources. The technologies brought by precision farming force the agriculture industry to unlock its digital potential.

Aspects and embodiments of the invention are described in the specification herein below and in the dependant claims.

As it will appear form the following disclosure of some possible examples, the system according to the present invention is designed specifically to extract biophysical indicators of plants, landscape and soil from hyperspectral and multispectral remote sensing data and allocate on GIS map as well as segregate all into data streams, apply most appropriate algorithms of data analysis and select best to fit farming with call-to-action recommendations for agronomists and farm managers considering the existing environmental conditions by means of AI predictive analytics, thereafter estimating most rational actions in advance by eliminating risk of diseases, nutritional deficiencies and various other forms of plant stress. Using geospatial data such system allows delivering timely location specific recommendations for optimization of operational activities during crop production. Apart from agricultural industry, the system however can be used in other industries that involve monitoring and analysis of landscape architecture with biological and chemical impact, those include construction, landscape maintenance and management in recreational golf courses, forestry, gardening, permaculture, management of inland water bodies such as lakes and reservoirs addressing. For more specific instance, problem of harmful algal bloom, biodiversity extinction, toxicity of soil, fertility, erosions, and desertification forecasting together with many other aspects of ecological monitoring and big data driven nature preservation preventive actions.

BRIEF DESCRIPTION OF THE DRAWINGS

Some embodiments of the invention are described herein with reference to the accompanying figures.

The description, together with the figures, makes apparent to a person having ordinary skill in the art how some embodiments of the invention may be practiced. The figures are for the purpose of illustrative discussion and no attempt is made to show structural details of an embodiment in more detail than is necessary for a fundamental understanding of the invention. For the sake of clarity, some objects depicted in the figures may not be to scale.

Figure 1 shows a schematic embodiment of the system belonging to the invention;
Figure 2a-2e show the use of a unique Spectral signature pattern recognition with use of neural networks;
Figures 3a-3f shows two schemas illustrating the operational mode of the system according to the present invention.

DETAILED DESCRIPTION OF THE DRAWINGS

Consolidated crop health remote sensing data analysis based on multi spectral pattern recognition together with live set of environmental variables is the key technological novelty behind the system object of the present invention.

The configuration described allows to give significant advantages for increasing crop yield in sustainable eco-friendly way by optimising the use of resources and reacting with highest efficiency. Particularly high yield results can be achieved when analysis also consider updated data variables collected from various sources, such as IOT, weather stations and portable laboratories.

As it will be underlined by the description here below, the systems aims to host and store data from a plurality of sensors to consider as part of analysis where datasets to be analysed with neural networks for prediction modelling in similar conditions.

The system can realize a software platform, preferably accessible through internet, to be provided to farmers and third party independent experts in crop sciences.

The platform will create marketplace for consulting and advisory services to be instantly available online to farmer regardless of the location. Multisource data collected and stored in a cloud system will create a learning environment for the artificial intelligence (AI) to improve symptomatic and conditional identification technology case by case.

Weather volatility under nutritional deficiency conditions is the main trigger to facilitate the spread of diseases, insects and weeds in field lowering the yield significantly. Therefore application of the following methodologies in a certain sequence to collect and analyse data is an Artificial Infrastructure learning infrastructure for plant physiology based prediction modelling represent an important feature of the system object of the present invention.

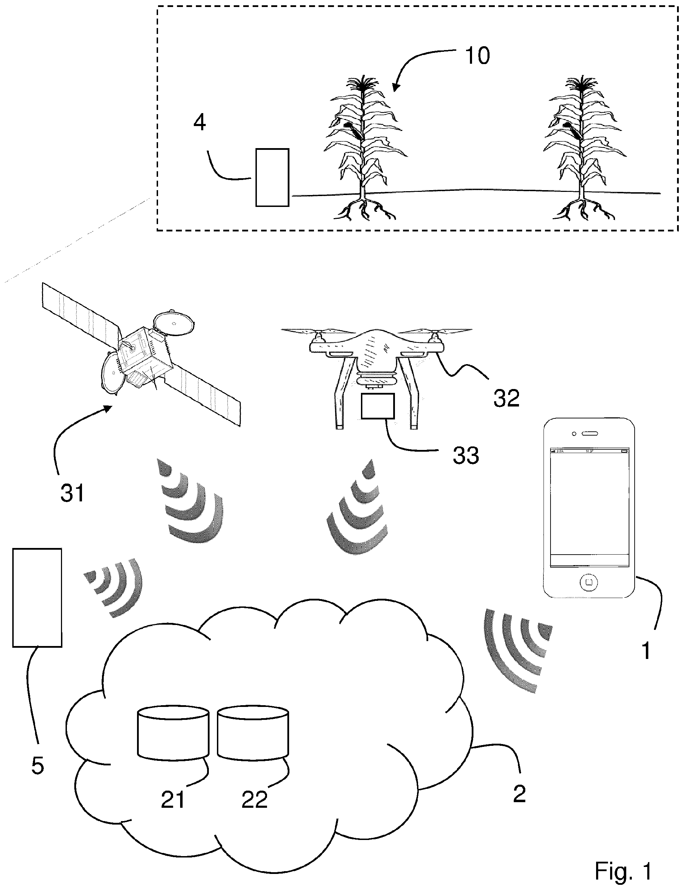

Figure 1 is a schematic view of a possible embodiment of the system according to the present invention.

The system for monitoring plants 10, comprises means for detecting spectral information of plants, means 5 for detecting meteorology information and means 4 for detecting soil information.

According to figure 1, the means for detecting spectral information comprise at least a satellite 31 and at least a drone 32, provided with a multispectral camera 33.

The system further comprises a processing unit 21 arranged for processing the detected information and storing unit 22 arranged for storing the detected information.

The system allows to create a web platform 2 to which farmer can access, for example through a user device, like smartphone 1.

The platform 2 can also present communications units arranged for the access to the information stored and/or processed by experts in pathology and crop physiology, which experts can send suggestion to the farmer through the platform 2 and the smartphone 1.

Thanks to its configuration, the system can therefore create a software platform 2, which will allow farmer to collect the information and give remote access to experts in pathology and crop physiology regardless of their location. Ability to integrate data from all opens sources will provide a lot of information for decision support However, solutions have to be selected considering additional important parameters such as soil and weather conditions. Where specific stress is identified processing, system shift and checks other wavebands which are in use, in order to describe any other physiological phenomena.

Combination of spectral with geometrical measurements, together with instance response will allow precise grading system operation and best management of crop and yield production or hazard prevention. Farmers will be able to choose the most optimal crops to sow considering soil parameters and crop rotation as well as precisely calculate seeding density, plan nutrition and protection program.

The system is a self learning crop stress detection system developed for management and prevention of crop stress. Machine and deep learning algorithms are able to identify any kind of correlations between various changes in data parameters measured simultaneously, particularly useful is the alignment with human pathology and physiology experts opinion providing all existing data collection and analysis tools and optimal action plan prioritized by budget or harvest target for farmer. By feeding live data from all sensors and open source while applying statistical prediction AI modelling to process information collected by various hardware software sources to detect, identify to prevent plant stress for crop yield protection purposes.

The multispectral camera 33 produces large amount of spectral information which then processed with ML algorithms combined with meteorological and soil data. The multispectral camera 33 is highly sensitive and can detect, carotenoids, chlorophyll concentration and minor signals as hormone and micronutrient presence, other stresses impact as diseases and nutrition deficiencies. The device is flexible in automatic and manual use allowing images acquisition at all ranges from 1 meter to several hundred meters while maintaining effective visual information collection at stable high rates. The versatility expressed in modes of operations allows usage as data generator for a wide range of needs. The camera 33 sensor produces images at 7 wavebands from the Visual spectral + Near Infra-Red spectral range, which are characterized by high spectral accuracy. In addition, there is an ability to control imaging tasks in order to produce effective 3D object maps which are of a very high value and not yet common in use or known to the majority of potential customers.

The system's data driven product novelty lies in discovering new knowledge by means of observation and identifying condition of plant in specific spectral band implementing the know-how of dealing with spectral data quality from each separated and combined. It consists of the ability to maximize data collection in all 3 aspects mentioned (Spectral, Meteorological, Biochemical) due to the understanding that none can be taken out of the formula correct forecasting of biological condition.

The system can therefore provide services to farmers based on selective multi-source data collection and develops analysis algorithms for both detection and identification of plant stress.

The multi-spectral camera 33 presents some advantages:

- Ability of generating images simultaneously at seven wavebands from the Visual spectral + Near Infra-Red spectral range of high spectral accuracy bands: 480nm, 520nm, 550nm, 670nm, 700nm, 730nm, 780nm
- Integratable with any UAV or aircraft, lightweight robust sensor with replaceable lenses filters of different optical filters
- Photosynthesis activity detection
- Soil fertility mapping
- 3D spectral mapping for automatic fruits and leaf counting with yield estimation capabilities

One of the most important aspect of the system of the present invention, is the possibility to combine satellite 31 and UAV (drone) 32 to obtain multispectral images.

Airborn made imaging using the multispectral camera sensor is combined with satellite imaging by few companies in the space (Taranis, Prospera) due to the high cost and complex scalability of field flyovers. Images made from satellite are cheap or free to obtain online and are available every 5 days. However, distance to the satellite and possible obstruction such as clouds (noise) between the field and satellite create errors when processed by algorithms when noise is present in the picture. This allows filtering fields, which are not in detailed analysis need. As a result, the customers (farmer) using the platform can save costs and focus at investigating and monitoring the fields with higher frequency which require more attention. Moreover, weather stations and IoT-enabled soil measurement sensors are placed in the field to collect data about climate conditions, water amounts, and other metrics over time.

Easy to use comprehensive system of technological solutions that enables state-of-the-art artificial intelligence interpretation based on processing all data through multiple data sources including lab, UAV, satellite and IoT. Our detect and alert AI is aimed to be relevant in supporting all kinds of imaging tasks, at very high coverage rate in real time. When fusing all mentioned information sources, there are higher chances to generate precise insights of plants status and more specifically most optimal solution to apply for spraying.

Vegetation analysis is an important part of thus UAV monitoring is required in many cases for targeted variable application of nutrition and protection, hence the system is aimed to process data from any from multispectral hyperspectral sensor regardless of brand. The quality of output data is however subject to resolution of the camera. The poorer image quality of sensor is, the less precise is data from index. It is therefore advised to use data from sensors with minimal resolution of 10 cm per pixel.

The Areal Operations Segment is designed to arrange flight in the needed time and location and Remote sensing segment are 2 important integral parts of the system helping to collect and process optical data. The software itself comprises of several elements:

According to an improvement of the system according to the present invention, the end user can define the area and time of filed scans.

As discussed above, the system can realize a software platform which comprises a plurality of software modules with different function that can be installed on a portable device 1 (smartphone, tablet or similar) and/or provided on the cloud platform 2.

One of this software module can be for example a flight Management Software (FMS), installed on a portable device (eg. Tabloid, smartphone, loptop) which helps to plan and manage UAV flights for farmer or drone operator.

The remote sensing segment consists of the following elements:

- Multispectral or Hyperspectral camera

- Data processing and archiving software (DPAS) - this software in installed on a remote server and can be accessed through the web.

Both of the web based software platform 2, MRS and DPAS, would be accessed by the user through a web based Application User Interface (AUI) application that would act as the web portal.

Features made available to the end user (farmers) for UAV data collection are as follows:

- Satellite monitoring
- Big Data weather analysis
- UAV Mission Planning
- Marketplace of service providers (drone operators, consultants etc.).
- Predictive analytics
- Farm Management

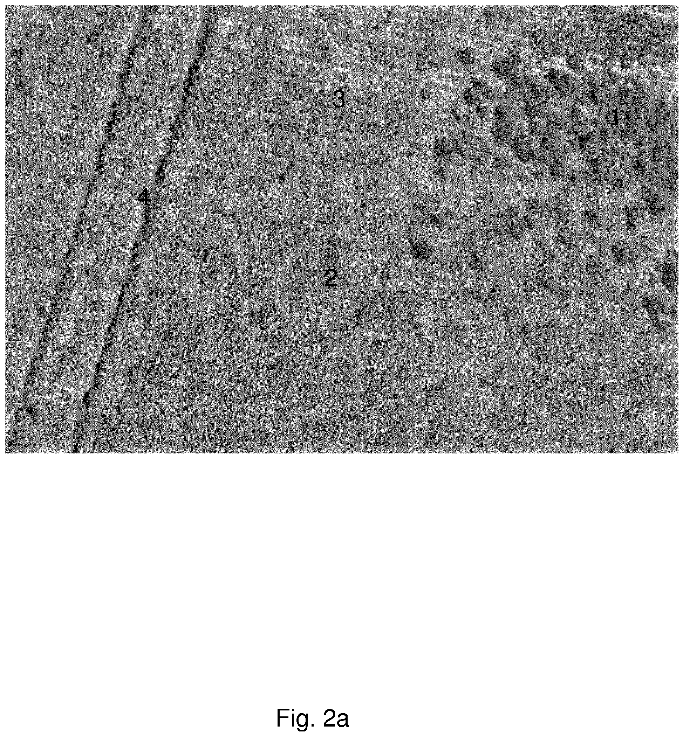

Figure 2a-2e show the use of a unique Spectral signature pattern recognition with use of neural networks.

Most important part is the ability to remotely detect and correctly identify problem among a wide range of specific physiological deficiencies happening inside crops before symptomatic visual effect can be observed, distinguish nutrient deficiencies from pathology and farm management mistakes, locate and prevent problems as well as quantify financial loss in the alternative scenario. Each of nutrient or chemicals has its own reflectance pattern to some specific narrow spectral bandwidth called spectral response. This principle allows generate detailed images, which are sensitive enough to enhance such delicate information. That would be done by integrating correlated agro technical aspects to known spectral ratios and indices, such as NDVI, GNDVI, CARI maps. Solid inputs such as those will allow increase confidence level of recommendations to farmers.

As we know a vegetation index is used to combine or filter multiple spectral data sets into a single value for each point on an image. Normalized difference vegetation index (NDVI), the most widely used and best-known vegetation index. With our own algorithm we can detect more detailed information about types of vegetation and therefore can segregate it into more categories such as active and passive (healthy and suffering). For example Figures 2a-2e show images collected from sugar beets. In this field we have weeds, open soil, plants with good and poor vegetation quality. In this case the following RGB-based indices were applied: RGBVI - Red-Green-Blue Vegetation Index, GLI (Green Leaf Index), NGRDI - Normalized Green Red Difference.

In figure 2a, the reference sign 1 indicates weeds, the reference sign 2 indicates good quality vegetation and the reference sign 3 indicates poor quality vegetation while the reference sign 4 indicate soil.

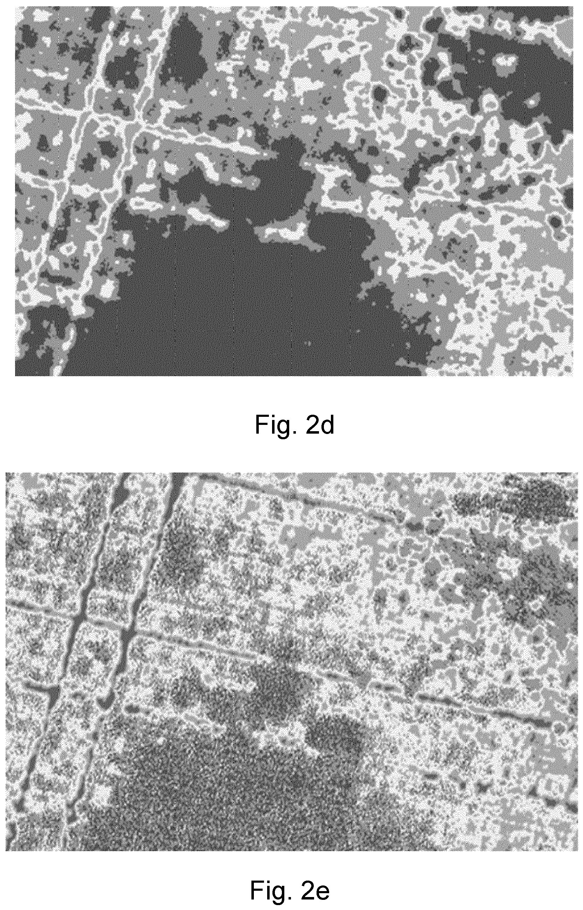

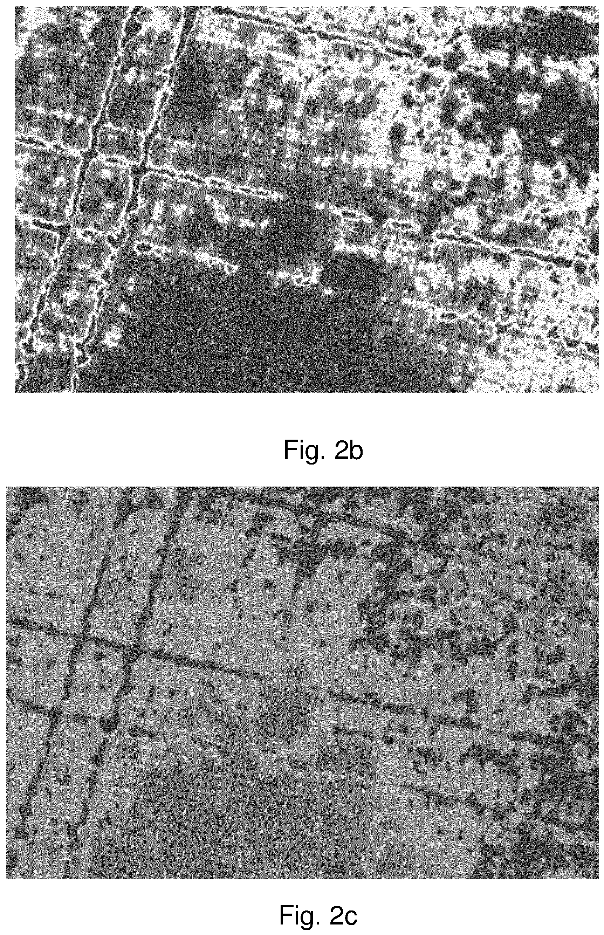

Figure 2b relates to figure 2a processed with index NDVI, figure 2c relates to figure 2a processed with index RGBVI, figure 2d relates to figure 2a processed with index GLI, figure 2e relates to figure 2a processed with index NGRDI.

NDVI shows all plants as general. NGRDI shows healthier and greener plants, poor quality crops are orange and red colors. Such cross-index analysis is a useful and helpful tool for understanding location specific stress and comparing with RGB ground made images and yield maps for making decisions further actions.

Given the date of sowing and based on number of Gross Degree Days, the algorithms of Artificial intelligence belonging to the system, can predict the most important micronutrients required for the current growth stage and identify best time for its application.

Automated algorithms of stress signal detection = processing satellite multispectral images allows detecting some of the less complex issues (such as general weaknesses) while by using NDVI imagery and identify suspected stressed field areas. By alerting the farmer, a choice of using a much detailed information collector which will provide full knowledge of field status is considered by using an adjusted altitude drone flight (according to the field's calendar and growth stage). As a result farmers can save on costs and focus on monitoring fields that require examination.

Moreover loT-enabled soil measurement sensors are done in the field to collect live data about soil temperature, salinity and acidity.

As discussed above, the means for detecting information relating to the soil, can comprises IOT sensors.

This sensors can be arranged in such a way to detect:

- Physical soil parameters = the system provides the means to detect problematic areas and assess the severity of crop stress in those areas, identify and detect insects damages, diseases as well as location of weeds considering chemical, biological and physical soil parameters for more reliable predictability of specific crop health problems;
- Biological content of soil (e.g. MicrobioMeter) = Bacteria plays an important role in breaking down nutrients and making them available to plant roots. Hence measuring presence and concentration of bacteria in the soil helps to identify areas where more intensive inoculation has to take place. Inoculant bacteria as well as fungus like mycorrhiza can be applied in the areas to improve biological quality of soil.

The system can comprise a plurality of sensors, mechanical sensors (soil compression measurement), electromechanical sensors (pH and soil nutrient content estimation), Dielectric sensors (Soil moisture measurement), airflow sensors (Soil air permeability measurement).

The processing unit process the information preferably through a cloud-based deep learning architecture. This comprehensive system of technological solutions enables the development of the state-of-the-art cloud-based architecture with chosen computational learning methods at the core. This "detect-and-alert" AI system of imaging processing tasks, including automated, time-efficient phenotyping, get real-time recommendations and guidance with specific actions. Process can be done based on open source code libraries which support images and tabulated data fusion analysis, now days at pytorch environment. It detects objects at high accuracy from ground and aerial images and is located on cloud. Novelty is expressed by fusing data sources that each refers to different time points of measurement but with constant effect. Therefore, just by knowing the connections and agronomical outcome of three main information sources analysis, the system develop the ability to predict better what will be the value of one data source based on two others.

Furthermore the systema can provide the generation of smart alerts.

For example, once critical temperatures, humidity or other soil and climate conditions are detected or forecasted outside of the harmless range for the plant, crop alert is generated via push notification, SMS and mobile call informing about harvest loss expected in such weather conditions. Farmer gets instant loss estimate and alert system informs the client about the potential losses to be incurred if no action is taken. In order to support farmers with needed advice constant data processing is required to manage risk and forecast loss. The more sources of data are synchronized together the more diverse range of predictions can be performed automatically, which is accessible to farm manager with delegated access can be viewed by third party crop health expert in nutrition and protection available in app or web. Mobile module allows repetitive monitoring on specific high-risk location points and helps address attention to specific locations in time and prioritise importance of different field locations.

The information detected by the means belonging to the system of the present invention, can comprise mobile laboratory analysis, which is still the most reliable and precise method of all in measuring chemical and biological content of soil as well as the leaf tissue. Some scalability was achieved with automatic soil sampling and can cover large fields per day however are still time consuming. This method is however crucial in building stress identification algorithms as it can eliminate errors by verifying results suggested by spectral analysis and plant physiology prediction models. Recorded GPS location of every sample taken automatically allocates divergence from spectral map when combining both sensor, results can be verified, stored and analysed together with all other data collected. Few but laboratories are IoT connected, therefore during scouting user can always add parameters of soil or plant together with notes and references attached to each GPS location in field where scouting event occured.

Furthermore, the means for detecting meteorology information can comprise weather stations: In order to increase reliability of incoming weather data there is a need to use as genuine data as possible. Other option is to interpolate relevant site data according to triangulations or weather models which is less preferable.

As illustrated in figure 1, the system can comprise a user unit, for example a smartphone 1, in which a mobile application can be loaded.

The mobile application allows the user, i.e. the farmer, to be connected to the platform 2.

The mobile application provides visual Navigation that directs its users to the right spot in the field where pictures of flowers, leaves, roots and stems can be taken for closer examination by most relevant experts in pathology, physiology or nutrition of this specific crop. Remote recommendations as well as life cloud collaboration via platform is particularly useful when additional pictures, reports, comments and notes to be added for each location, file attachments as well as results of lab tests can be allocated to each GPS point in field together with pictures and notes where stress was detected or predicted by the system. With short notice nutrition can be quantified and directed to a specific field point. One of the outcomes of the platform is to let farmers better manage working time and point to a certain location which needs treatment of some kind.

The system allows to consolidate all commonly used existing devices and applications of software, crop monitoring tools by integrating online with any existing soil IoT, UAV, SaaS, mobile labs, AI and Big Data technologies to provide third party crop science experts can provide professional recommendations and advice as well as knowledge transfer, specific aspects of relevant research in support, for the development of the most efficient crop production automation control possible.

With the help of deep and machine learning data collected from multiple sources can be segmented, processed and presented in scalable way and thus allows farmers to respond to crop physiological needs at the right time in the right place with specific dosage of organic natural solution or reduce toxic products used.

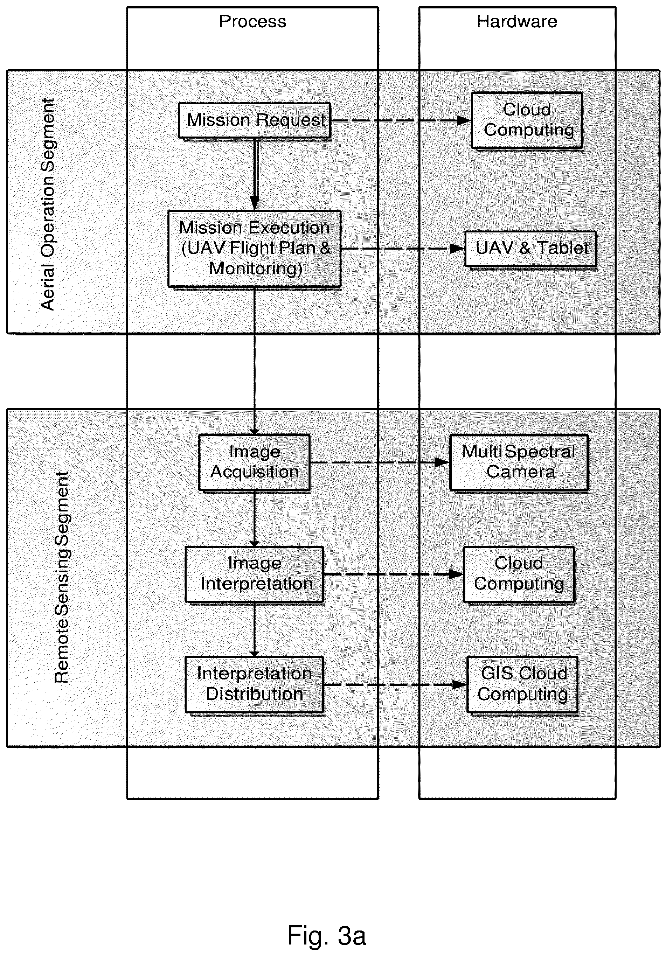

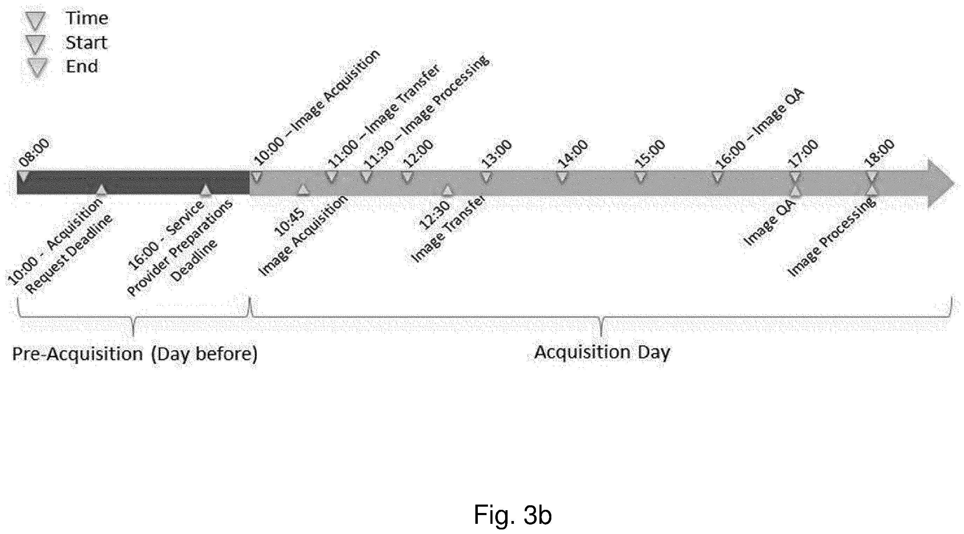

According to the figures 3a-3f, the system of the present invention is suitable for low cost UAV s and multispectral sensor s available to operate on a daily basis. Therefore, its reliability should be very high.

The system would have up to 10 flying slots a day up to 45 min each (TBR) if weather conditions are favorable for the flight. The system informs operator and farmer on best time to scout and suggests fields for scouting prioritized by urgency.

The system operates according to a predefined flight plan that can be imported from any flight plan software, or transferred automatically when done Flight Management System with minimal intervention by the ground operator in the field.

Between flight sessions, the operator guided at each step to follow health and safety procedure and utilize the most out of the scouting time. Starting from setting the UAV before flight and going through checklist of inventory and equipment, batteries (UAV parts, sensors, memory card needed for the flight). The operator would always have a maintenance kit in case of failure of the equipment.

The images from the memory card (of the UAV) are then uploaded to the Database (DB) where processed and interpreted by Machine Learning and Deep Learning algorithms for specific stress type detection shown in the AUI. Some of the preliminary data processing to be done in field right after flight with the above mentioned software installed on PC to provide raw data preprocessing and stitching. This reduces the size of memory space and makes 2ce more data transferrable to cloud in a given day. Four kind of users are identified as target audience of the system: End user, UAV operator, QA, administrator. Each user would have a different window interface and permission levels. At each time any of users could enter the DB and see the status of progress.

With Satellite imagery and weather big data farm manager receives recommendation creating thematic map by confirming the request in in Interface. At this point mission request is created by software (MRS). GIS map tags with Indicated location of the field then forwarded to selected UAV flight operator out of those available online according the predefined preferences in the DB.

24 hours before the flight, the flight plan is downloaded to the management device of the service provider automatically (by wireless communication). Once the mission is approved, the user can track his flight status constantly.

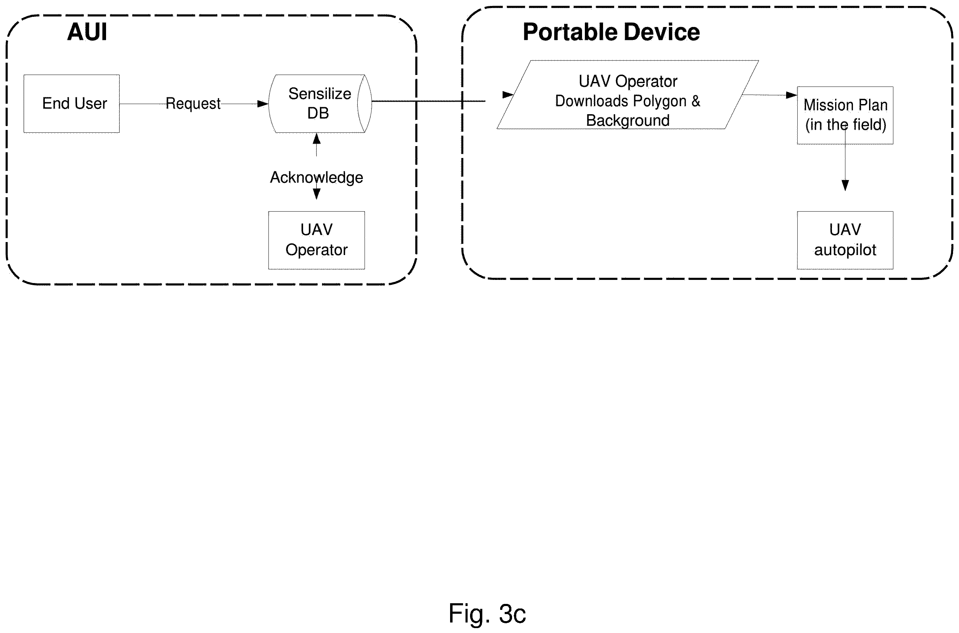

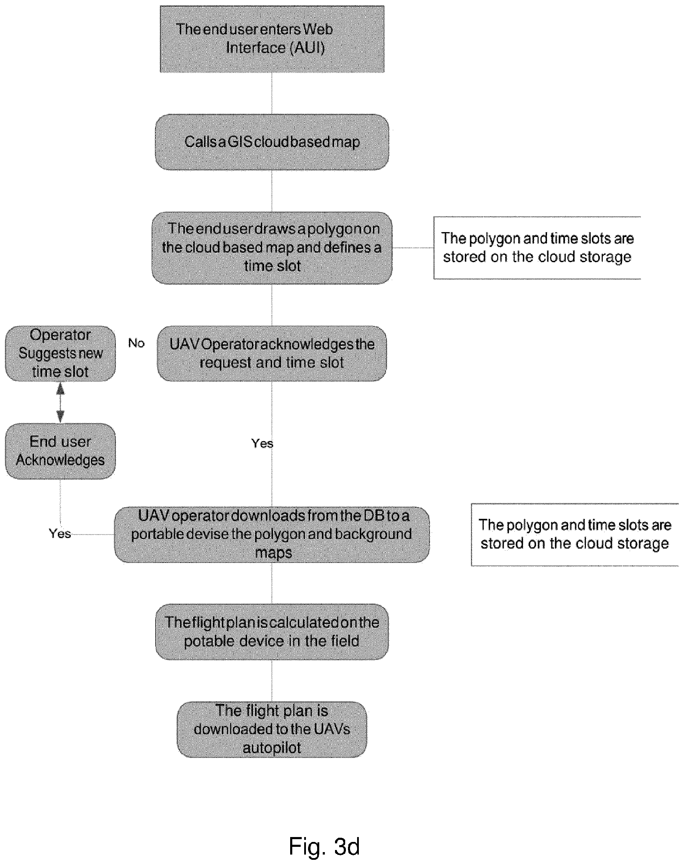

According to figure 3c and 3d, upon arriving to the field, the operator would scout the area for the best take-off and landings areas, and then draw a flight plan on portable device.

After flight the memory card with the recently acquired images would be transferred wirelessly to the Data Processing and Archiving Servers (DPAS).

The Data of flight telemetry of the UAV is transferred together with the acquired images to the DPAS installed on PC in field right after every flight for initial processing.

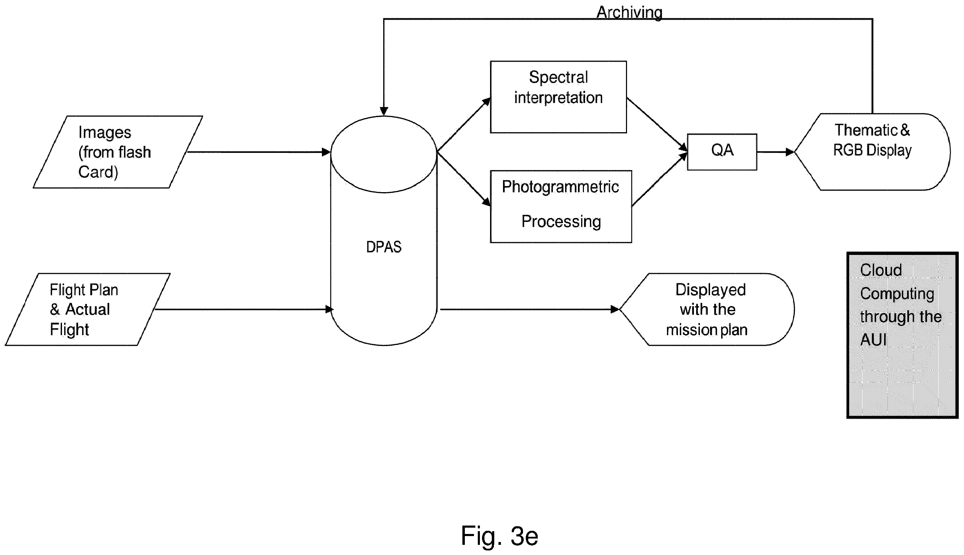

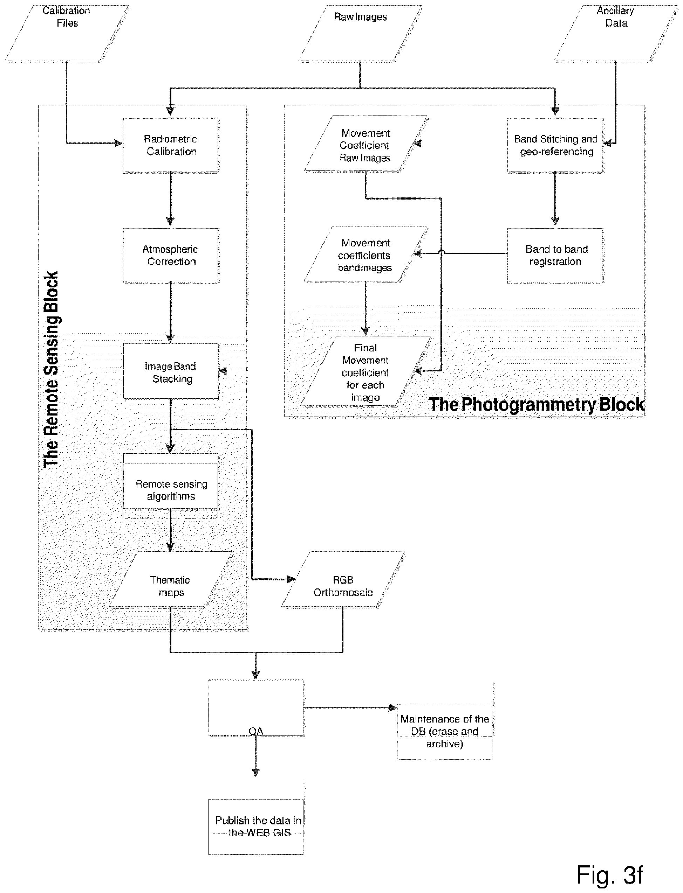

According to figure 3e and 3f, the DPAS receives the raw images from the multispectral or hyperspectral camera used in fields scans by uploading manually from memory card or wireless and executed flight plan from the flight management software to store it until uploaded to the cloud as field map for future research and analysis. All the images are stitched together with orthomosaic software available ontaken for data processing on PC in field. Maps previously processed with other stitching and analyses software can also be uploaded (e.g. Pix4D).

The user can track the processing status, export and import ready mosaic image maps in standard file formats (such as JPEG or TIFF).

Furthermore, according to figures 1 and 3a-3f, the Application User Interface (AUI) is a web based system serving as interaction point between users (farmers, consultants, UAV operators) and the system itself that connects various software applications in the background such as Web based GIS, AI (Artificial Intelligence Neural Networks), IoT infrastructure in a seamless manner. Scouting app is provided to guide through the process of field area instruction with a smart phone and other portable devices from third parties. Through this interface the user can monitor crop and soil condition and plan prevention action and the status of each task as well as see timeline of events and tasks with details and description.

The mission request software is based on Cloud GIS software that would relay as much as possible on existing component so the user can see previously market fields. The user could write on each polygon in free text the name of the polygon. This text could be edited (font size, color, format etc..). The following attributes are mandatory for the user to fill: Area Name, Inspection Requested date, Crop type

The flight plan software is controlled from the operator's management device that has the following specifications: Operating time - 2 hours minimum. The Mission Planning Software (MPS) would calculate the flight lines according to the polygon downloaded from the MRS. The calculation would be done so that the time of flight would be the shortest. The system would draw the optimal flight lines in accordance with most rational application of specified selected product.

The MPS is designed to take into account all required flying regulations , most common with 400 ft above ground.

The landing spot would be defined in one of the following ways (TBR):

- Land at the current location of the device (preferred - the operator scouts the area for the best landing spot and indicate it on the device, by the touch of a button).
- Touching the landing site on a map / orthophoto shown on the screen of the device.
- Entering the coordinates of a specific site (the least preferred option).

The device would show the operator in the field the location of the drone at all time.

The operator would not update the flight plan of the drone in real time.

The device would receive the flight plan automatically from the MPS via wireless connection to a temporal flight DB on its own drive.

The user can export a flight plan to the auto pilot only of one polygon at a time.

The flight plan would be transferred to the airborne segment through wireless connection.

The device would check that the mission plan is within 1000 m (TBR) from the current location of the device when transferring the mission plan.

Executed flight plans cannot be deleted from the management device until they are downloaded to DB.

As long as there is wireless communication, the operator can upload to his device any polygon.

In the management screen the last flight, plan and route, would be shown.

The actual flight route sent from the UAV would be saved in the device HD and sent through wireless connection to DB. After acknowledgment by the DB, it would be automatically erased from the device. The operator could indicate which background he wants to view the executed flight plan.

According to a preferred embodiment, the Multispectral Camera would consist of two compartments.

The first one is the optical compartment, that would consist of the 8 focal plane array together with filters mounted on the lens. This compartment would be closed so that the optics would be protected from dust and minor damages.

The second one is the electronic compartment that would consist of the operating boards and connector of the system. This compartment should be ventilated by various means.

Some of the preferred features of the camera and of the system, which can be combined or can be independently provided, will be listed below.

The multispectral camera system should be heat dissipation from the electronics board, especially from the processor, by a heat sink and (if necessary) by fans.

The detectors should be mounted on the same optical bench in an array of 2 by 4.

The mechanical interface between the EOP and the payload bay is TBD.

The FOV of the system should be 43.2 deg (TBR) across track and 27.5 (TBR) along track, the IFOV should be 1 mrad (TBR) (10 cm @ 100 m).

There should be a protection window before the fore optics.

There should be an ability changes the fore optics according to the application.

The sensor should have a global shutter.

Frame rate should be up to 5 Hz.

The spectral range of the system is between 470 to 790 nm.

Up to 8 spectral bands.

The spectral bands would be achieved by filters.

The filters should cover the whole field of view.

The filter could be changed by the manufacture according to the application. It is preferred that the filters would be standard off-the-shelf filters (eg. Endevor).

The out of band blocking of the filter should be $1 \times 10^{-2}$ or better.

The detectors should be a have small dark current smaller than 10e with minimal changes as a factor of temperature.

The camera should be fitted with a diode that measures the total solar irradiance with the same spectral bands as is senction.

The diode should be mounted looking upwards, and covered by a diffuser and a ND filter if needed.

The reading from the diode would be in the same rate as the frames of the imager.

The readings from the diodes should be saves on a flash drive.

The camera should be able to store more than 2500 (TBR) images

The images for the spectral sensors must be saved uncompressed in RAW format.

The dynamic range of the camera should be at least 10 bit (12 bit design goal).

The triggering of the sensors (8 or more) should be simultaneously with a maximal error between the triggering of 0.3 msec (TBR).

The naming convention of each image would be as follows: XXX_DDMMYY_hhmmss.ss_III

Where:

XXX - is the system ID that can consist of letters and numbers in any possible combination.
DDMMYY - is the date of the image acquisition in the format of DDMMYY (D-day, MM- month, YY-Year) for example 010115.
hhmmss.ss - is the time of the image acquisition in the format of hhmmss.ss (hh - hour, mm minutes, ss.ss- seconds in 10th of milliseconds) for example 010203.10.
III - is the wavelength of the specific sensor (the name of the down welling sensor would be SUN)

The camera should have the ability to receive a trig from the autopilot in order to acquire an image. The pulse would be of 500 ms long.

The camera should receive a trig from the autopilot to shot down the system. The pulse would be of 1000 ms long, positive.

The camera should have an automatic integration time controller (AITC).

Each sensor should have the ability to receive a different integration time.

The camera should have the ability to set the integration time to a shorter value than the maximal integration time that is defined by the frame rate.

In the header of the image the date and time (timestamp) should be written.

The integration time of the system should be written into the header of the images.

In the image header the serial number of the camera would be written.

The images should be stored on a removable memory. There should be easy access to the flash drives.

The camera would receive the power from the airframe. The camera should have a power regulator to 5v that can receive power from various sources up to 14 v.

There should be two kinds of connectors.

Power and trig connectors that have a special socket with a secure lock.

The camera should have a LED indicators that would indicate that it is powered, the detectors are powered, and that it is acquiring images.

The camera should write a log file. In the log file the configuration of the cameras, drop frame, events, errors etc.. should be written.

The camera should write the time in an accurate manner, the design goal that it would write UTC /GMT including the location measured from the GPS sensor.

The interpretation of the acquired data would be done by a server that is located in the software platform 2 with AINN analytics and data processing .

The interpretation phase would consist of two main processes: remote sensing and photogrammetry. These two processes can run in parallel and co-inside in the middle of the processing.

There are provided two major computational blocks:

Band to band registration that would result in multispectral image cube (4 to 8 bands) of a single image.

Image geo-referencing and stitching of the images that would result in a multispectral ortho mosaic image of the whole acquired area.

AI spectral signature identification alignc with soil and vegetation lab test results (TBR) and reduces the need of making numerous tests across the whole field.

The geo-reference accuracy of the mosaicked images should be up to 5 meters (TBR).

The second step in the photogrammetry route is the band to and registration.

The spectral remote sensing computational block consists of two major steps: preprocessing and algorithms implementation.

The first two steps are the radiometric and atmospheric correction of the images. This step is done on the single images as they were acquired by the camera before they are stitched into one map. The third and last step is the application of the photogrammetric coefficients, calculated in the photogrammetric block, on the atmospheric corrected images and staking the bands one on the other to generate a multispectral image block.

Radiometric calibration (including the non-uniformity) would be done according to the following equation:

$$L (x,y,\lambda) = [DN(x,y,\lambda) - (DN_{dark} (x,y,\lambda)] * Cal(x,y,\lambda) * Int$$

Where:

L (x,y,$\lambda$) - is the radiometric corrected value of each pixel in the image for every band in W/sr/nm/m2

DN(x,y,$\lambda$) - is the digital number reading of the camera for each pixel in the images for every band.

(DN(x,y,$\lambda$) - in the digital number reading of the camera when the shutter is closed for each pixel in the image for every band.

Cal(x,y,$\lambda$) - is the radiometric calibration function for each pixel in the image for every band.

Int - is the integration time / gain. Remark:

- This calibration should be done to the pyranometer as well.
- This function may change a little along the development of the sensor.

Reflectance calculation -should be done, at first, by dividing the whole image by the photo diode that measured the total solar irradiance, according to the following equation:A

$$R_{Image(x,y,\lambda)} = \frac{L_{Image(x,y,\lambda)}}{L_{Pyranometer(x,y,\lambda)}}$$

Where:

RImage(x,y,λ)= is the reflectance of each pixel in the image for every band.
LImage - is the radiometric corrected function in W/sr/nm/m2 for each pixel in the image for every band.
LPyranometer(x,y,λ) - is the radiometric corrected for the diode for every band.

Applying the mosaicking, rectification and band to band registration on the radiometrically and atmospherically corrected images.
The images of every band after the are stacked together into one images known as the multispectral images block. (Remark: this step is not mandatory.)
Running the interpretation algorithm. An example of such algorithm would be like GNDVI:

$$GNDVI = \frac{(R_{NIR} - R_{Green})}{(R_{NIR} + R_{Green})}$$

Where:

RNIR= is the reflectance in the near infra-red range of the spectrum around 800 nm.

RGreen - in the reflectance in the green range on the spectrum around 550 nm.

Remark:

Changes in the definitions of the spectral bands might happen. But the general structure of the algorithm would remain the same.
According to a possible embodiment of the method of the present invention, there is provided a step of application of microorganisms to the plants.
Precise farming methods together with plants' symbionts (bacteria and fungi) were proven to be an effective and financially feasible method to shift to organic and sustainable agriculture.
Currently used pesticides (especially herbicides and insecticides), even though they have a negative impact both on humans and environment, are much safer than ones from the first generations. On the contrary, mineral fertilizers, that can also cause significant harm to the environment, are used more and more widely.
Using nitrogen-fixating and phosphate solubilizing bacteria is a very effective and ecologically justified way of providing nitrogen compounds to plants.
Sustainable approach in agriculture requires preservation and increasing biodiversity of soil, especially a diversity of microbiome of soil.
Despite all advantages of organic farming it is usually quite hard for farmers to shift into organic farming rapidly and quickly, as it requires complete change of traditional methods. Precise agriculture together with microbiological modification of soil and plants is the only way to obtain high yields without using toxic chemicals.
The method of providing nutrients to plants in an eco-friendly way is based on modification of microbiome of soil (especially at plants' rhizosphere zone) and transformation of the root system of plants. Transformation of the root system is achieved via applying phytohormones of different types (auxins, cytokinins and gibberellins) and results in significant increase of number and length of lateral roots and root hairs. Together with phytohormones various mutualistic microorganism-symbionts are applied. Increased number and length of lateral roots and root hairs results in an increase of total root system square, thus providing habitat for mutualistic symbionts (bacteria and fungi). Those mutualistic bacteria and fungi could reside on the surface of roots, inside the root tissues, in rhizosphere zone or freely in soil and perform different valuable actions: nitrogen fixation, phosphorus and sulfur solubilization, synthesis of various biologically active compounds (vitamins, phytohormones, antibiotics, amines, amino acids, glycoproteins, proteins, glomalin etc.).

Such mutualistic symbiosis between microorganisms and plants, which is additionally enhanced by applying phytohormones together with precise agriculture approaches, is an effective and eco-friendly alternative to traditional farming methods. Symbiotic bacteria and fungi supply important nutrients (nitrogen and phosphorous) to plant, protect it from pests, pathogen and stresses by synthesis of biologically active compounds (antibiotics protect plant from pathogenic bacteria and fungi, vitamins and phytohormones â€" from stresses, Î'-endotoxins â€" from insects, etc.). In its turn, plants with transformed and enlarged root system provide mutualistic symbionts habitat in its tissues, on the root surface or in the rhizosphere zone, synthesize oligo- and polysaccharides for bacteria and fungus nutrition, etc.

The method could be applied both on monocotyledonous and dicotyledonous plant with different life cycles (spring and winter), including, but not limited to, common wheat (Triticum aestivum), durum wheat (Triticum durum), maize (Zea mays), soybean (Glycine max), asian rice (Oryza sativa), barley (Hordeum vulgare), sorghum (Sorghum bicolor), oat (Avena sativa), triticale (Triticosecale), rye (Secale cereale), buckwheat (Fagopyrum esculentum), etc.

The method itself consists of two applications of active compounds. The first application is carried out during early stages of plants' development. During the first application phytohormones and symbionts (bacteria and fungi) together with adjuvants are administered. Phytohormones provide transformation of the root system of plants and symbionts (bacteria and fungi) supply nutrients and biologically active compounds to plants. The adjuvant (sticking agent) provides effectivization of the inoculation process.

The second application is carried out before the inflorescences emergency occurs. During the second application symbionts together with adjuvants (sticking agents) are applied.

Initial stages of planting are the same as in traditional agriculture. Seeds are prepared for sowing (dressed with fungicides and sprouting stimulants, scarificated etc.) and seeded. Sowing density and pattern do not affect method efficiency, but the depth of sowing should not be excessive, as it could affect efficiency of the first application.

The first application is carried out at early growth stages, when first 3-5 true leaves are formed on the main stem. For the first application solution of phytohormones and symbionts together with adjuvant (sticking agent) are used. For proper transformation of the root system phytohormones of different types (auxins, cytokinins and gibberellins) are used together. Simultaneously with phytohormones mutualistic symbionts (bacterial or fungal) are inoculated. Symbiotic fungal mutualists perform phosphorus solubilization thus supplying phosphorus to plants, synthetize glycoproteins (e.g. glomalin) thus improving soil quality, etc. Bacterial symbionts have wider spectrum of possible valuable features. Symbiotic bacteria could perform nitrogen fixation from the atmosphere and solubilization phosphorous, sulfur and iron from soil thus supplying important nutrients to plant, synthetize various biologically active compounds (e.g. phytohormones, antibiotics, vitamins, proteins and glycoproteins, etc.) that increase the host plant's tolerance to numerous environmental stresses (both biotic and abiotic).

Administration of the active compounds (phytohormones and symbionts) could be performed in various ways, such as: spraying, root treatment, ultra-low or very low volume application, etc.

The second application is carried out before the inflorescences emergency occurs. For the second application symbiotic agents together with adjuvant (sticking agent) are used. The second application is necessary to increase the number of active symbiotic agents in the rhizosphere zone before the generative growth stages, as plants require a significant amount of nutrients for yield formation.

Both for first and second application different species of plants' symbionts could be used including, but not limited to species from such genuses: Paenibacillus, Azotobacter, Bacillus, Escherichia, Pseudomonas, Rhizobium, Lactobacillus, Klebsiella, Frankia, Beijerinckia, Clostridium, Azospirillum, Bradyrhizobium, Sinorhizobium, Mesorhizobium, Azorhizobium, Herbaspirillum, Methylobacterium, Burkholderia, Glomus, Claroideoglomus, Nostoc, Streptomyces, Agrobacterium.

The concentration of symbiotic agents could vary from $1.75 \times 10^3$ to $8 \times 10^{12}$ CFU (living bacteria, spores, propagules, etc.).

For first application phytohormones and plant growth regulators of different classes (auxins, cytokinins and gibberellins) could be used including, but not limited to, IAA, IBA, naphthaleneacetamide, Î±-naphthaleneacetic acid, 2,4-DEP, 2,4-D (in various chemical forms), benzyladenine, kinetin, zeatin, ACC, Gibberellin A1 (GA1), Gibberellic acid (GA3), 2iP.

The amount of phytohormones can vary from 3 to 700 grams per hectare. The total solution volume can vary from 4 (ultra-low volume application method) to 500 (standard top spraying method) liters per hectare, depending on the way of administration and water requirement of particular crop.

EMBODIMENT (on the example of winter common wheat)

Seeds of common winter wheat are prepared by standard methods (seed dressing with any pesticides does not interfere with future applications) and sowed.

The first application is performed when plants gain 3-5 true leaves and length 5-25 centimeters. For the first application both phytohormones and symbionts together with adjuvant (sticking agent) are used. Active agents are administered using standard surface spraying method with total water volume from 4 (ultra-low volume application method) to 350 (standard top spraying method) liters per hectare. For proper root system transformation different types of phytohormones are used together. As for auxins 2-ethylhexyl aether 2,4-D is used with a total amount from 50 to 600 grams of active substance per hectare. As for cytokinins kinetin (6N-furfuryladenine) is used with a total amount from 10 to 70 grams of active substance per hectare. As for gibberellins gibberellic acid (GA-1) is used with a total amount from 3 to 15 grams of active substance per hectare. As for symbiotic microorganisms species from genuses Azotobacter, Pseudomonas, Rhizobium, Lactobacillus, Bacillus, Glomus, Paenibacillus (together with biologically active substances - metabolites, produced by those bacteria) are used with concentration from $1.75 \times 10^3 - 1.5 \times 10^{12}$ to and total suspension volume from 4 (ultra-low volume application method) to 350 (standard top spraying method) liters per hectare.

The second application is performed when plants' inflorescences are about to emerge. For the second application only symbionts together with adjuvant (sticking agent) are used. Symbionts with adjuvant are administered using standard surface spraying method with total solution volume from 4 (ultra-low volume application method) to 350 (standard top spraying method) liters per hectare. As for symbiotic microorganisms species from genuses Azotobacter, Pseudomonas, Rhizobium, Lactobacillus, Bacillus, Glomus, Paenibacillus (together with biologically active substances - metabolites, produced by those bacteria) are used with concentration from $1.0 \times 10^8 - 1.5 \times 10^{12}$ to and total suspension volume from 4 (ultra-low volume application method) to 350 (standard top spraying method) liters per hectare.

All control fields (where the method wasn't applied) were fertilized with standard mineral fertilizers - ammonium nitrate, monopotassium phosphate, diammonium phosphate, potassium nitrate etc. The volumes of the active substance of the nutrients were: for N (nitrogen) 200 kilograms per hectare, for P (phosphorous) - 120 kg/ha, for K (potassium) 120 kg/ha. On the study fields mineral nitrogen fertilizers weren't applied, the application rate for potassium and phosphorus was reduced by 1/3 and total volume was 60 kg/ha for P and K.

The volume of all pesticides (fungicides, insecticides, herbicides etc.) on all fields, where the method was applied, was reduced by 50%. On the control fields all plant protection products (pesticides) were applied in a standard way in standard volumes.

Final result of all applications is providing most needed nutrients (nitrogen, phosphorus, sulfur etc.) and important biologically active compounds (vitamins, amino acids, phytohormones etc.) to plant in an ecologically friendly and economically beneficial way. Nitrogen is the most important nutrient for plants, as it is required for amino acids and protein synthesis. Many symbiotic bacteria have an ability to fix molecular nitrogen from the atmosphere and transform it into forms that are available for consuming by plants. Such symbiotic nitrogen fixation is ecologically friendly and highly effective (up to 90 kg\ha of nitrogen for non-legumes and up to 550 kg\ha for legumes). Moreover, symbiotic bacteria and fungi are able to solubilize phosphorus, sulfur and iron, transforming these elements into forms, that are available for consuming by plants, and synthetize various biologically active compounds (vitamins, antibiotics, phytohormones, etc.), protecting plants from many different biotic and abiotic stresses.

In the example with winter common wheat in fields, where the method was applied, mass of obtained yield fluctuated from 78 to 84 centners per hectare, in control fields â€" from 80 to 82 centners per hectare. The yield obtained from control and study fields was examined for quality indicators. The yield from all study fields where the method was applicated was high quality (765 g\l grain nature, 16.08% protein). The yield from all control fields where standard fertilizers were used varied from medium to high quality (from 705 to 770 g\l grain nature, from 14% to 17% protein contain)

**Claims**

1. A system for evaluating and monitoring plants,
   **characterised in that**
   it comprises:

   > means for detecting spectral information of plants (10),
   > means (5) for detecting meteorology information,
   > means (4) for detecting soil information,
   > the system further comprising a processing unit (21) communicating with said means and arranged for processing the detected information, the system comprising storing unit (22) arranged for storing the detected information.

2. System according to claim 1, wherein the processing unit (21) comprises at least a communication unit arranged for transmitting the detected and/or processed information to a user, said communication unit being arranged for receiving from said user instruction about treatments to be done on said plants.

3. System according to claim 1 or claim 2, wherein said means for detecting spectral information of plants comprises at least one satellite (31).

4. System according to one or more of the preceding claims, wherein said means for detecting spectral information of plants comprises at least a drone (32).

5. System according to claim 4, wherein said drone (32) comprises a multispectral camera (33) to acquire spectral images of the plants (10).

6. System according to one or more of the preceding claims, wherein said processing unit (21) comprises artificial neural networks.

7. System according to one or more of the preceding claims, wherein said means for detecting soil information comprises mechanical sensors to detect soil compression and/or electromechanical sensors to detect pH and soil nutrient content and/or dielectric sensors to detect Soil moisture and/or airflow sensors to detect Soil air permeability.

8. Method for evaluating and monitoring plants comprising the following steps:

a) acquiring information about said plants,
b) processing said information,

**characterised in that**
step a) provides for the combined acquisition of spectral information of plants (10), meteorology information and soil information.

9. Method according to claim 8, wherein said information are processed through the use of artificial neural networks.

10. Method according to claim 8, wherein there is provided a step of application of microorganisms to the plants.

Fig. 1

Fig. 2a

Fig. 2d

Fig. 2e

Fig. 2b

Fig. 2c

| Process | Hardware |
|---------|----------|

**Aerial Operation Segment**

Mission Request -----→ Cloud Computing

Mission Execution (UAV Flight Plan & Monitoring) -----→ UAV & Tablet

**Remote Sensing Segment**

Image Acquisition -----→ Multi Spectral Camera

Image Interpretation -----→ Cloud Computing

Interpretation Distribution -----→ GIS Cloud Computing

Fig. 3a

Fig. 3b

EP 3 979 193 A1

## AUI

| End User | →Request→ | Sensilize DB |

Acknowledge

UAV Operator

## Portable Device

UAV Operator Downloads Polygon & Background → Mission Plan (in the field)

UAV autopilot

Fig. 3c

EP 3 979 193 A1

The end user enters Web Interface (AUI)

Calls a GIS cloud based map

The end user draws a polygon on the cloud based map and defines a time slot → The polygon and time slots are stored on the cloud storage

Operator Suggests new time slot ← No ← UAV Operator acknowledges the request and time slot

End user Acknowledges

Yes — UAV operator downloads from the DB to a portable devise the polygon and background maps → The polygon and time slots are stored on the cloud storage

Yes (below UAV Operator acknowledges)

The flight plan is calculated on the potable device in the field

The flight plan is downloaded to the UAVs autopilot

Fig. 3d

Fig. 3e

Fig. 3f

| | Europäisches Patentamt |
| --- | --- |
| | European Patent Office |
| | Office européen des brevets |

# EUROPEAN SEARCH REPORT

Application Number

EP 20 19 9939

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | WO 2019/032648 A1 (INDIGO AG INC [US]) 14 February 2019 (2019-02-14) * abstract * * figures 1,10 * * paragraphs [0007], [0010], [0040], [0043], [0044], [0070], [0077], [0103] * | 1-10 | INV. G06T7/00 G06K9/00 G06T7/90 |
| | ----- | | |
| X | US 2020/202127 A1 (CHEN YAQI [US] ET AL) 25 June 2020 (2020-06-25) * abstract * * figures 1,4 * * paragraphs [0003], [0036], [0089], [0090] * | 1,8 | |
| | ----- | | |
| X | US 2015/106434 A1 (FIENE LARRY [US] ET AL) 16 April 2015 (2015-04-16) * abstract * * paragraphs [0001], [0017] - [0021], [0069] * * figure 1 * | 1,8 | |
| | ----- | | TECHNICAL FIELDS SEARCHED (IPC) G06T G06K |

The present search report has been drawn up for all claims

| Place of search | Date of completion of the search | Examiner |
| --- | --- | --- |
| Munich | 11 February 2021 | Scholz, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 19 9939

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2021

| Patent document cited in search report | | Publication date | Patent family member(s) | | Publication date |
|---|---|---|---|---|---|
| WO 2019032648 | A1 | 14-02-2019 | EP | 3664591 A1 | 17-06-2020 |
| | | | US | 2019050948 A1 | 14-02-2019 |
| | | | WO | 2019032648 A1 | 14-02-2019 |
| US 2020202127 | A1 | 25-06-2020 | US | 2020202127 A1 | 25-06-2020 |
| | | | WO | 2020132674 A1 | 25-06-2020 |
| US 2015106434 | A1 | 16-04-2015 | NONE | | |

For more details about this annex : see Official Journal of the European Patent Office, No. 12/82